# EUROPEAN PATENT APPLICATION

(11) **EP 2 639 029 A1**
(43) Date of publication of application: **18.09.2013**
(21) Application number: 13159006.9
(22) Date of filing: 13.03.2013
(51) Int. Cl.: B28B 1/24, B28B 11/00

(54) **Apparatus and process for producing a stopper in a ceramic roll**

(30) Priority: 15.03.2012 IT VR20120046
(71) Applicant: Novaref S.p.A., 37030 Colognola ai Colli (VR) (IT)
(72) Inventor: Vellere, Marco, 37030 Colognola ai Colli (VR) (IT)
(74) Representative: Fisauli, Beatrice A. M.

(57) **Abstract**

It refers to a ceramic roll comprising, in its inside, one or more stoppers, adapted to ensure the plugging of said ceramic roll. The invention refers to an apparatus and a process to accomplish said plugging as well as to a particular mixture utilized to obtain said stoppers.

## Description

The present invention refers, in general, to a ceramic roll for continuous furnaces, to an apparatus for the production of said ceramic roll and to the relative process. More particularly, the present invention refers to a ceramic roll comprising, in its inside, one or more stoppers, to an apparatus and a process to carry out said stoppers as well as to a mixture utilized to obtain said stoppers.

As is known, ceramic articles to be baked are moved inside continuous baking furnaces by utilizing rolls whose rotation allows the ceramic articles to be displaced, said ceramic articles being arranged on said rolls. To this end, rolls made of a refractory ceramic material are utilized to withstand high temperatures and are hollow internally.

In order to avoid the formation of air flows flowing inside the roll, which air flows are undesirable to the baking operations inside the furnace, each roll is usually provided at one end or at both ends with a stopper acting as a plug. Concerning the methods for the production of said stoppers and their application to the rolls, the prior art discloses several processes.

A first method involves at first the molding and baking of ceramic stoppers of different dimensions according to the size of the inner diameter of the roll to be plugged; for the production of said stoppers it is also possible to utilize ceramic pieces that are glued together. Then, the so-obtained stoppers are inserted manually at both ends of the roll, and finally, a special refractory glue is injected by means of an appropriate injector and is arranged along the edge of each stopper and in contact with the inner surface of the roll so as to block the stoppers in the roll. However, said method is rather laborious as the stoppers must be produced in advance and in various sizes according to the diameter of the roll to be plugged; besides, their positioning is performed manually.

A second method for the production of plugging elements for ceramic rolls involves a manual positioning of ceramic fiber, available on the market, which may be combined with a ceramic mixture inside each roll to be plugged. However, also this method involves a manual positioning of each stopper, which makes the application impractical and time consuming. In addition, the ceramic fiber is not considered ecological and does not allow a waste disposal of the roll at the end of its life as standard ceramic waste.

A third method consists in pushing, manually or mechanically, a stopper made of a refractory material and having a predetermined diameter in the inside of the roll, at both ends. During the insertion, the stopper deforms mechanically and adheres to the inner diameter of the roll so as to ensure the seal. This last method allows on the one side a mechanical insertion of the plug on making the application simpler and more practical but on the other side, this method requires preformed stoppers of an appropriate measure according to the diameter of the roll to be plugged. Besides, this method does not ensure a perfect stability of the stopper inside the roll.

It is easy to understand how all the above-mentioned methods are difficult to be implemented automatically.

An aim of the present invention is to provide a roll for kilns or furnaces comprising, in its inside, at least a stopper in order to avoid the formation of air flows in the inside of the roll, and in particular a roll comprising an ecological stopper to be disposed with the roll at the end of its use.

Another aim of the invention is to provide an apparatus and a process to form a stopper inside a ceramic roll for kilns or furnaces and precisely, at the end of the ceramic roll in order to avoid the formation of air flows inside said roll. A further aim of the invention is to provide an apparatus and a process to form a stopper inside a ceramic roll for kilns or furnaces in a practical, rapid way.

Said aims and advantages are reached according to the invention through an apparatus for producing a stopper in the inside of a ceramic roll for continuous furnaces, characterized by comprising:
- a working zone where to produce the stopper in the roll;
- means of rotation such as a rotating cylinder, adapted to make the roll to be plugged rotate in the working zone;
- at least an injector, connected to a reservoir containing a ceramic mixture and adapted to inject the ceramic mixture in the inside of the roll in order to produce the stopper;
- moving means for the injector, which means is adapted to insert the injector in the inside of the roll and to make the injector translate towards the exit.

The so-described apparatus allows to obtain a suitably plugged roll in an automatic way and not manually, which makes the roll plugging much more convenient and faster.

Obviously, the apparatus may comprise an injector for each side of the roll so as to form a stopper at both ends of the roll. In this way, the processing times are further reduced.

Advantageously, the apparatus according to the invention may comprise means for locking the roll to be plugged in the working area, such as retaining elements. In this way, the roll to be plugged is locked when it is moved to the working area.

Besides, the apparatus according to the invention may comprise also a first inclined plane to load the roll in which to form the stopper and a second inclined plane is comprised to unload the roll once the stopper has been formed.

The aims and advantages are also obtained through a process for producing a stopper in the inside of a ceramic roll for continuous furnaces, characterized by comprising the following phases:
- putting the roll to be plugged in rotation;
- inserting an injector in an end of the roll to be plugged;
- once the injector has reached a predetermined point in the inside of the roll, injecting a mixture of refractory amalgam by means of the injector in order to form a stopper in the inside of the roll;
- while injecting the mixture, the injector must be brought for a certain length out of the roll, which length corresponds to the thickness of the stopper to be obtained;
- once the injector has been displaced for a distance which corresponds to the thickness of the stopper to be obtained, the injection of mixture is stopped;
- removing the injector from the roll.

The process according to the invention allows to carry out the plugging of a furnace roll in a rapid, automatic way; besides, the so-obtained stopper is fixed rigidly inside the roll.

Advantageously, the injection of the mixture of refractory slurry may take place simultaneously at both ends of the roll so as to obtain two stoppers in the same roll, which entails a saving of time.

The process according to the invention involves the drying of the stopper or stoppers obtained, even during the transport as the injected mixture is sheltered inside the roll.

Advantageously, the process may comprise a further step for the drilling of a through-hole in each of the two stoppers previously obtained in the roll. In this way, the degassing of the plugged roll is guaranteed.

In addition, the aims and advantages are achieved by a mixture utilized to obtain a stopper inside a ceramic roll for continuous furnaces, **characterized in that** it comprises alumina and silica. In particular, the mixture according to the invention may comprise alumina in the percentage comprised between 70% and 85% by weight and silica in the percentage comprised between10% and 20% by weight.

Besides, the mixture according to the invention may include alkali oxides. Further features and details of the invention will be better understood from the following specification which is provided as a non-limiting example.

A plant to carry out stoppers inside a ceramic rolls for furnaces comprises a first inclined plane and a second inclined plane, which are separated by a working area.

On the first inclined plane, each roll to be plugged rolls from a loading position to a working position corresponding to the working area where the roll is plugged. On the second inclined plane, the plugged roll rolls from the working position to the unloading position in which the roll is unloaded from the plant.

The working area comprises mechanical stops to lock the roll that rolls from the first inclined plane.

At the mechanical stops, in the working position, the plant comprises cylinders coaxial to the roll to be worked and properly moved by one or more electrical motors. When the roll to be plugged is in the working area, the cylinders cause the rotation of the roll about its main axis.

The plant comprises an injector connected through a conduit to a reservoir containing a ceramic mixture of alumina and silica, properly mixed.

On the upper part, the reservoir is closed by a cap pushed by a hydraulic piston whose power and motion are adjusted by a hydraulic unit.

The working area comprises moving means connected to the injector to allow the movement of such means inside the roll to be plugged along its main axis. The moving means bring the injector in the inside of the roll, at one of its ends, at a distance ranging from 0 to 80 cm from the same end.

The hydraulic piston is actuated inside the reservoir and the mixture is thus brought from the reservoir to the injector which injects the mixture in the inside of the roll while the roll is rotated. At the same time, the injector is displaced by moving means out of the roll.

Then, the hydraulic piston is lowered by a distance suitably determined for the placing of an amount of mixture proportional to the diameter of the roll to be plugged, on taking into account also the movement of the injector during the injection. In fact, the injector is moved for a predetermined portion so that the roll is provided with a stopper at one of its ends.

A second injector is connected to a respective reservoir or to the same reservoir as described previously and may be placed also at the opposite end of the roll so as to make a homologue stopper. Thus, the roll may comprise two stoppers, arranged at the ends of the roll and produced simultaneously. Once the plugging of the roll has been completed, the roll is released from the mechanical stops and is rolled on the second inclined plane which unloads the worked rolls to the stock outlet.

The process to obtain a stopper at an end of a roll for continuous furnaces consists of the following phases: putting the roll to be worked in rotation, inserting an injector in an end of the roll and once the injector has reached a predetermined point for the beginning of the plugging operation, injecting and dosing a special refractory amalgam in order to form a stopper in the inside of the roll. Said amalgam is formed by a mixture of alumina and silica.

While the injector injects the mixture, the injector must be brought for a certain length out of the roll, which length corresponds to the thickness of the stopper to be obtained. Once the injector has been displaced for a distance which corresponds to the thickness of the stopper to be obtained, the injection of mixture is stopped on removing the injector from the roll.

Then, the plug is dried for a short period of about 3 hours; in particular, the drying of the mixture inside the roll may take place during the transport of the roll to the user. The so-processed roll is ready to be utilized.

The above described phases may be performed so as to form a stopper at each end of the roll so that a closed chamber is obtained inside the roll. This closed chamber may be put in communication with the external environment by obtaining a through hole in each stopper. In this way, the degassing of the plugged roll is guaranteed.

The refractory mix for the plugging of the ceramic roll for furnaces is obtained with a ceramic mixture of alumina and silica. This is a refractory mortar whose setting may be an air setting and/or a hydraulic setting. The refractory mortar is used to hermetically seal the roll and is prepared by utilizing alumina and clay as raw materials; in particular, the chemical composition of the refractory mortar used includes alumina in an amount between 70% and 85% of the weight, silica in an amount between 10% and 20% of the weight and other alkali oxides.

In particular, the alkali oxides may be selected among the following ones (the percentages refer to the weight):
- iron oxide (Fe₂O₃) in an amount between 0.4% and 1%;
- sodium oxide (Na₂O) in an amount between 2% and 4%;
- calcium oxide (CaO) in an amount between 1% and 2%;
- magnesium oxide (MgO) in an amount between 1% and 2%;
- potassium oxide (K₂O) in an amount between 0.5% and 2%.

The so-obtained refractory mortar has a loss on ignition between 1% and 2%. The apparatus, process and mixture according to the invention allow to obtain a suitably plugged roll automatically and not manually, the plugging operation being much more convenient and faster.

Besides, in the above described injection process, the material utilized for the plugging remains integral with the roll.

A further advantage of the invention consists in the fact that the used mixture allows to dispose of the roll and its plug according to ecological procedures. A technician of this sector can make further changes or variants that are to be considered as included in the scope of protection of the present invention.

## Claims

1. Apparatus for continuously producing a stopper in the inside of a ceramic roll for furnaces, **characterized by** comprising:
- a working zone where to produce the stopper in the roll;
- means of rotation for the roll, which means is adapted to make the roll rotate about its main axis in the working zone;
- at least an injector, connected to a reservoir containing a ceramic mixture and adapted to inject the ceramic mixture in the inside of the roll in order to produce the stopper;
- moving means for the at least an injector, which means is adapted to insert the injector in the inside of the roll and to make the injector translate to the exit of the roll while the injector is injecting the mixture.

2. Apparatus according to the preceding claim, wherein means for locking the roll to be plugged up is comprised in the working zone.

3. Apparatus according to one of the preceding claims, wherein drilling means is comprised to drill a through hole in the stopper.

4. Apparatus according to one of the preceding claims, wherein a first inclined plane is comprised to load on the working zone the roll in which to form the stopper and a second inclined plane is comprised to unload the roll from the working zone once the stopper has been formed.

5. Process for producing a stopper in the inside of a ceramic roll for continuous type furnaces, **characterized by** comprising the following phases:
- putting the roll to be plugged up in rotation;
- inserting an injector in an end of the roll to be plugged up;
- once the injector has reached a predetermined point in the inside of the roll, injecting a mixture of refractory amalgam by means of the injector in order to form a stopper in the inside of the roll;
- while injecting the mixture, the injector must be brought for a certain length out of the roll, which length corresponds to the thickness of the stopper to be obtained;
- once the injector has been displaced for a distance which corresponds to the thickness of the stopper to be obtained, the injection of mixture is stopped;
- removing the injector from the roll.

6. Process according to the preceding claim, wherein a further drying phase is comprised to dry the so-obtained stopper in air.

7. Process according to one of the claims 5 or 6, wherein a further phase is comprised to drill a through hole in the so-obtained stopper in the inside of the roll in order to ensure the degassing of the plugged-up roller.

8. Mixture utilized to obtain a stopper in the inside of a ceramic roll for continuous type furnaces, **characterized by** comprising alumina and/or silica.

9. Mixture according to the preceding claim, wherein alumina is comprised in the percentage of 70%-85% and silica is comprised in the percentage of 10%-20%.

10. Mixture according to one of the claims 8 or 9, wherein alkali oxides are comprised.
